# EUROPÄISCHE PATENTANMELDUNG

(11) **EP 3 434 523 A1**
(43) Veröffentlichungstag der Anmeldung: **30.01.2019**
(21) Anmeldenummer: 18183384.9
(22) Anmeldetag: 13.07.2018
(51) Int. Cl.: B60R 1/00, H04N 5/235

(54) **INDIREKTES SICHTSYSTEM FÜR EIN FAHRZEUG**

(30) Priorität: 25.07.2017 DE 102017116849
(71) Anmelder: MEKRA Lang GmbH & Co. KG, 91465 Ergersheim (DE)
(72) Erfinder: Lang, Werner, 91465 Ergersheim (DE); Enz, Andreas, 91593 Burgbernheim (DE); Keller, Sebastian, 91465 Ergersheim (DE); Redlingshöfer, Andreas, 90619 Trautskirchen (DE)
(74) Vertreter: Kramer Barske Schmidtchen Patentanwälte PartG mbB

(57) **Zusammenfassung**

Es wird ein indirektes Sichtsystem (100) für ein Fahrzeug vorgeschlagen, das wenigstens eine Aufnahmeeinheit (10), die zum Aufnehmen von Bilddaten wenigstens eines Sichtbereichs um das Fahrzeug herum angepasst ist, wenigstens eine Berechnungseinheit (20), die zum Verarbeiten der von der Aufnahmeeinheit aufgenommenen Bilddaten angepasst ist, und wenigstens eine Wiedergabeeinheit (30), die zum Anzeigen des Sichtbereichs angepasst ist, aufweist. Das Sichtsystem weist ferner eine erste Einstellung (1) zum Anzeigen des Sichtbereichs und wenigstens eine zweite Einstellung (2) zum Anzeigen des Sichtbereichs auf. Die erste Einstellung (1) verwendet vorgegebene Bildparameter, und die wenigstens zweite Einstellung (2) verwendet gegenüber der ersten Einstellung (1) geänderte Bildparameter. Die erste Einstellung (1) und die wenigstens zweite Einstellung (2) sind bei einer wenigstens teilweise lichtschwachen Fahrzeugumgebung verwendbar.

## Beschreibung

### TECHNISCHES GEBIET

Die vorliegende Erfindung betrifft ein indirektes Sichtsystem für ein Fahrzeug, insbesondere ein Nutzfahrzeug.

### HINTERGRUND

Bei Kraftfahrzeugen ist es gesetzlich vorgeschrieben, sogenannte Sichtfelder rund um das Fahrzeug für den Fahrer im Fahrbetrieb einsehbar zu machen. Welche Sichtfelder einsehbar sein müssen, basiert auf dem Typ des Kraftfahrzeugs, zum Beispiel Krafträdern, Kraftfahrzeuge zum Transportieren von Passagieren, Kraftfahrzeuge zum Transportieren von Gütern, etc. Die Einsehbarkeit der Sichtfelder muss von einer Einrichtung zur indirekten Sicht bereitgestellt werden und die Sichtfelder müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa sind die Sichtfelder, die für einen Fahrer jederzeit zuverlässig einsehbar sein müssen, in der UN/ECE-Richtlinie Nr. 46 definiert, die nachfolgend weiter beschrieben wird. Weitere relevante Normen bzw. Richtlinien schließen beispielsweise die ISO 5721, ISO 5006, ISO 16505, ISO14401 und die EU 167/2013 ein. Neben den gesetzlich geforderten Sichtfeldern werden oftmals weitere Bereiche rund um das Fahrzeug, sogenannte Sichtbereiche, durch Einrichtungen zur indirekten Sicht einsehbar gemacht. Sichtbereiche können gesetzlich vorgeschriebene Sichtfelder enthalten.

Üblicherweise wird die Betrachtung der Sichtfelder mit einem oder mehreren Spiegeln ermöglicht. Jedoch haben Spiegel einige Nachteile. Zum Beispiel zeigen Spiegel dem Fahrer lediglich Objekte, die auf derselben Seite des Spiegels wie der Fahrer sind. Irgendein Objekt hinter einem Spiegel kann nicht durch diesen Spiegel gezeigt werden. Zusätzlich zeigen Spiegel, die lediglich aus flachem Glas hergestellt sind, dem Fahrer einen kleinen Bereich, außer die Spiegel sind sehr nahe bei dem Fahrer. Falls sie konvex geformt sind, erzeugt dies eine Bildverzerrung. Große Fahrzeuge weisen üblicherweise sechs oder mehr Spiegel auf, die um die Außenseite des Fahrzeugs herum montiert sind, von denen die meisten verzerrt und konvex sind, was es schwierig für den Fahrer macht, auf alle relevanten Spiegel zur selben Zeit zu achten. Dennoch gibt es um diese Fahrzeuge üblicherweise immer noch blinde Flecke, trotz all der Spiegel.

In letzter Zeit wurde es zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen. In solchen Kamerasystemen erfasst (ermittelt und speichert gegebenenfalls) eine Bildsensoreinrichtung kontinuierlich ein Bild. Die (Video-) Daten, die von der Bilderfassungseinheit erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, dass die Sichtfelder jederzeit für den Fahrer permanent einsehbar sind. Gleichzeitig liefert das Sichtsystem eine verbesserte Nachtansicht, flexiblere Anordnungsmöglichkeiten und größere Sichtfelder mit der Möglichkeit einer geringeren Verzerrung. Die DE 10 2013 220 839 A1 lehrt beispielsweise ein Kamerasystem für ein Fahrzeug.

Permanent einsehbar bedeutet in diesem Zusammenhang, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon oder durch Einblenden anderer Darstellungen derart unterbrochen wird, dass das Sichtfeld nicht komplett gesehen werden kann. Entsprechend werden das entsprechende Sichtfeld oder die Sichtfelder kontinuierlich und in Echtzeit auf der Anzeigeeinrichtung gezeigt bzw. einsehbar gemacht. Dies gilt zumindest für als permanent einsehbar vorgeschriebene Sichtfelder für alle Fahrzeugzustände, bei denen der Zündschalter eingeschaltet ist, bevorzugter Weise zum Beispiel gekoppelt an einen Sensor, der ein entsprechendes Signal empfängt, beispielsweise eine Türöffnungssignal oder ein Zündungseinschaltsignal.

Moderne Spiegel erzeugen ein nahezu perfekt scharfes Bild für einen Fahrer. Der Detaillierungsgrad, der dem Fahrer zur Verfügung steht, hängt von dem Abstand zu dem Objekt und der Sehkraft des Fahrers ab. Mit Kamerasystemen wird der Detaillierungsgrad von vielen verschiedenen Parametern beeinflusst: Der Auflösung des Kamerasensors, dem Sichtfeld der Kamera, aber auch der Auflösung des Monitors, welcher Teil des Kamerasichtfeldes auf dem Monitor angezeigt wird und wie groß dieser Teil ist, wie weit der Monitor von dem Fahrerplatz entfernt ist und der Sehkraft des Fahrers. Je nach Kombination dieser Parameter können die Fahrer imstande sein, hinein zu zoomen (eine Ansicht zu vergrößern) und weit entfernte Objekte klar zu sehen, die sie in einem Spiegel nicht erkennen oder entsprechend detailreich sehen können.

Bei indirekten Sichtsystemen nimmt wenigstens eine Aufnahmeeinheit (z.B. eine Kamera) Bilder der Umgebung um das Fahrzeug herum auf. Die von der Kamera aufgenommenen Bilder werden ggf. (d.h. wenn eine Bearbeitung erforderlich ist) als Bilddaten an eine Berechnungseinheit (z.B. eine ECU) geleitet, wo die Bilddaten mittels vorgegebener (Bild-) Parameter verarbeitet werden. Danach werden die verarbeiteten Bilddaten auf wenigstens einer Wiedergabeeinheit (z.B. einem Monitor) angezeigt. Abhängig von der Kamera (bzw. dem Bildsensor) und der zur Verarbeitung der Bilddaten verwendeten Parametern entsprechen die auf dem Monitor angezeigten Bilder der Fahrzeugumgebung mehr oder weniger der tatsächlichen Umgebung um das Fahrzeug herum. Genauer gesagt, wird die Anzeige von Bildern auf dem Monitor üblicherweise anhand von Parametern derart angepasst, dass der Fahrer des Fahrzeugs auf komfortable Art und Weise einen schnellen und genauen Überblick über die Umgebung des Fahrzeugs herum erhält. So wird die Umgebung regelmäßig nicht exakt so angezeigt, wie sie tatsächlich von dem Sensor aufgenommen wird, sondern das Bild wird durch Anpassen von Bildparametern, wie beispielsweise des Kontrastes, der Farbsättigung, der Farbtemperatur, etc., angepasst und verbessert (z.B. an gesetzliche Anforderungen oder Fahreranforderungen, solange gesetzliche Anforderungen dabei nicht missachtet werden).

Allgemein ist bei einer Aufnahme der Fahrzeugumgebung bei Tag oder in einer hellen Umgebung jedoch eine geringere Anpassung der Bilddaten erforderlich als bei Nacht oder in einer dunklen Umgebung, weil der Kamerasensor bei Tag eine größere Lichtmenge aufnimmt als bei Nacht. Mit anderen Worten sind die von der Kamera aufgenommenen Bilddaten bei Tag oder in einer hellen Umgebung allein aufgrund der auf den Sensor auftreffenden Lichtmenge derart genau, dass die Bilddaten kaum von der Berechnungseinheit bearbeitet werden müssen und die Anzeige der Bilddaten auf dem Monitor im Wesentlichen den von der Kamera aufgenommenen Bildern der Fahrzeugumgebung entspricht. Die bei Tag vorliegende Lichtmenge wird allgemein als Tageslicht bezeichnet. Tageslicht liegt dann vor, wenn ein Gebiet (z.B. eine Fahrzeugumgebung) gut ausgeleuchtet ist, d.h., eine Helligkeit wie bei Tag (üblicherweise zwischen in etwa 1.000 und 100.000 lx [lux]) aufweist. Dabei ist die Bezeichnung "Tageslicht" unabhängig davon, ob die Fahrzeugumgebung von der Sonne oder einer künstlichen Lichtquelle ausgeleuchtet wird, solange die Umgebung im Allgemeinen die oben angegebenen Helligkeitswerte aufweist und somit als "hell" bezeichnet werden kann.

Bei Nacht oder in einer dunklen Umgebung hingegen ist eine stärkere Anpassung der Bilddaten erforderlich als bei Tag, weil der Kamerasensor bei Nacht eine geringere Lichtmenge aufnimmt als bei Tag. Mit anderen Worten sind die von der Kamera aufgenommenen Bilddaten bei Nacht aufgrund der auf den Sensor auftreffenden geringen Lichtmenge derart unzureichend, dass die Bilddaten in hohem Maße von der Berechnungseinheit bearbeitet werden müssen, um dem Fahrer auf dem Monitor aussagekräftige, verständliche Bilder anzeigen zu können, auf denen Objekte in der Fahrzeugumgebung erkannt werden können. Bei Nacht oder in einer dunklen Umgebung herrscht allgemein Dunkelheit. Dunkelheit liegt dann vor, wenn ein Gebiet (z.B. eine Fahrzeugumgebung) schwach oder gar nicht ausgeleuchtet ist (lichtschwache Umgebung), d.h., eine Helligkeit wie bei Nacht (üblicherweise zwischen in etwa 0 und 1.000 lx [lux]) aufweist. Dabei ist es unabhängig davon, ob die Fahrzeugumgebung aufgrund von fehlendem Sonnenlicht oder künstlich durch Gebäude (z.B. Tiefgaragen) schlecht ausgeleuchtet ist, solange die Umgebung im Allgemeinen die oben angegebenen Helligkeitswerte aufweist und somit als "dunkel" bezeichnet werden kann. Da bei Nacht die Fahrzeugumgebung üblicherweise schlecht zu erkennen ist, wird sie dem Fahrer in der Fahrerkabine auf dem Monitor üblicherweise heller als die in der Umgebung tatsächlich zur Verfügung stehende Helligkeit dargestellt. Dazu kann beispielsweise eine am Fahrzeug angebrachte Zusatzbeleuchtung verwendet werden, um die Helligkeit der Fahrzeugumgebung zu erhöhen. Alternativ können Sensoren zur Objekterkennung, wie beispielsweise Wärmebildsensoren oder Radarsensoren, verwendet werden, um mögliche Hindernisse zu detektieren und diese auf dem Monitor anzeigen zu lassen.

Trotzdem kann bei Kamera-Monitor-Systemen als indirekte Sichtsysteme für Fahrzeuge, insbesondere mit einer Zulassung nach Vorgaben durch die ECE-R46 für Spiegelersatzsysteme, bei Dunkelheit (d.h. bei lichtschwacher Umgebung) die Umgebung um das Fahrzeug herum für den Fahrer unzureichend dargestellt sein. Die Anforderungen aus der ECE-R46, wie z.B. die Erkennbarkeit oder Unterscheidbarkeit von Punktlichtquellen, und ein begrenzter Dynamikumfang (Kontrastumfang) der Aufnahmeeinheit zur Aufnahme von Sichtbereichen um das Fahrzeug herum verhindern, dass Details in dunklen Teilen der Sichtbereiche für den Fahrer sichtbar und erkennbar auf dem Monitor anzeigt werden. Auf der anderen Seite würde eine Anzeige von Details in dunklen Teilen der Sichtbereiche zu einem Detailverlust in hellen Teilen der Sichtbereiche führen. Beispielsweise wäre dadurch die Unterscheidbarkeit von Punktlichtquellen reduziert oder nicht mehr gegeben. Folglich kann der Fahrer bei bestehenden Sichtsystemen bei teilweiser oder vollständig lichtschwacher Umgebung Körper wie Fußgänger, unbeleuchtete Fahrzeuge oder andere Hindernisse nicht auf dem Monitor erkennen, was zu gefährlichen Situationen und ggf. zu Unfällen führen kann.

### ZUSAMMENFASSUNG

Entsprechend ist es eine Aufgabe der vorliegenden Erfindung, ein indirektes Sichtsystem für ein Fahrzeug, insbesondere ein Nutzfahrzeug, vorzusehen, das dem Fahrer bei wenigstens teilweiser lichtschwacher Fahrzeugumgebung alle zur Einschätzung der Umgebung erforderlichen Informationen angibt.

Die oben genannte Aufgabe wird durch ein indirektes Sichtsystem für ein Fahrzeug mit den Merkmalen des Anspruchs 1 gelöst. Bevorzugte Ausführungsformen sind in den abhängigen Ansprüchen angegeben.

Der Erfindung liegt der Gedanke zugrunde, die Be- oder Verarbeitung von Bilddaten einer wenigstens teilweisen lichtschwachen Fahrzeugumgebung zur Anzeige auf einer Wiedergabeeinheit, wie z.B. einem Monitor, derart zu optimieren, dass der Fahrer alle sicherheitsrelevanten Informationen schnell und detailgetreu erkennen kann. Dazu weist das Sichtsystem zwei Einstellungen (Settings) zum Anzeigen wenigstens eines Sichtbereichs um das Fahrzeug herum auf, die bei einer wenigstens teilweise lichtschwachen Umgebung verwendet werden können. Sowohl die erste als auch die wenigstens zweite Einstellung sind Einstellungen für lichtschwache Umgebungen. Daneben weist das Sichtsystem noch eine oder mehrere Einstellungen für Tageslichtumgebungen auf. Ferner kann das indirekte Sichtsystem weitere Einstellungen (eine dritte und weitere Einstellungen) für lichtschwache Umgebungen aufweisen.

Die erste Einstellung verwendet vorgegebene Bildparameter zur Verarbeitung der von einer Aufnahmeeinheit aufgenommenen Bilddaten. Die vorgegebenen Bildparameter umfassen beispielsweise eine vorgegebene (d.h. vorher festgelegte, festgesetzte) Anpassung des Kontrasts, der Farbtemperatur, der Sättigung, etc. von Bilddaten, die von der Aufnahmeeinheit aufgenommen werden. Die vorgegebenen Bildparameter sind - abhängig von normalen Fahrsituationen, wie beispielsweise Autobahnfahrten oder Überlandfahrten, und der der Aufnahmeeinheit zur Verfügung stehenden Restlichtmenge - stets gleich. Die vorgegebenen Bildparameter können empirisch für verschiedene normale Fahrsituationen und -bedingungen (z.B. Fahrgeschwindigkeit) und für verschiedene Restlichtmengen ermittelt werden und in einer Datenbank, einer Tabelle, oder ähnlichem gespeichert werden und von einer Berechnungseinheit (z.B. einer ECU, einem Prozessor, etc.) je nachdem, welche Lichtverhältnisse in der Fahrzeugumgebung vorliegen, entsprechend ausgewählt werden.

Die zweite Einstellung verwendet gegenüber den Bildparametern der ersten Einstellung geänderte Bildparameter zur Verarbeitung der von der Aufnahmeeinheit aufgenommenen Bilddaten. Die geänderten Bildparameter umfassen eine Änderung des Kontrasts, der Farbtemperatur, der Sättigung, etc. von Bilddaten, die von der Aufnahmeeinheit aufgenommen werden. Die geänderten Bildparameter sind - abhängig von speziellen Fahrsituationen, wie beispielsweise Fahrmanövern (z.B. Rangieren, Abbiegen, etc.), Bedingungen in der Fahrzeugumgebung, Bedingungen in der Fahrerkabine, dem Verhalten des Fahrers, etc. - stets veränderlich bzw. anpassbar.

Zur Festlegung, welche vorgegebenen Bildparameter oder welche geänderten Bildparameter bei der ersten und der zweiten Einstellung verwendet werden sollen, wird die Fahrsituation des Fahrzeugs als auch die Restlichtmenge in der Fahrzeugumgebung anhaltend überwacht.

Unter Bildparametern sind die Auflösung, der Kontrast, die Sättigung, die Farbtemperatur (d.h. der Weißabgleich), die Farbtöne, die Belichtung, etc. von Bilddaten zu verstehen. Eine Anpassung der Bildparameter erfolgt somit dadurch, dass die Auflösung des Bildsensors der Aufnahmeeinheit variiert wird (Auflösung kleiner oder gleich der nativen Auflösung des Bildsensors), die Graduationskurve des angezeigten Bildes angepasst wird (d.h., dass der Kontrast des Bildes verändert wird), die Farbsättigung, die Farbtemperatur und die Farbtöne des Bildes angepasst werden, die Belichtung des Bildsensors angepasst wird (d.h. die Blendenöffnung und/oder die Belichtungszeit angepasst werden), etc. Des Weiteren kann eine Anpassung der Bildparameter durch sogenanntes Pixelmapping erfolgen. Bei Pixelmapping erfolgt eine Zusammenfassung (Clustern) von mehreren Sensorpixeln, um so einzelne kleine und damit lichtschwache Pixel zu vergrößeren und damit zu lichtstarken Pixeln zusammenzufassen und so die Belichtung der Pixel zu erhöhen. Pixelmapping erfolgt über die Berechnungseinheit. Alternativ oder zusätzlich zu den oben genannten Anpassungen der Bildparameter kann eine Anpassung von Bildparametern aber auch durch Anbringen und Verwenden einer zusätzlichen Lichtquelle oder einer Wärmebildkamera (monochrom oder farbig) am Fahrzeug erfolgen. Dadurch kann der dunkle Teil der Fahrzeugumgebung ausgeleuchtet werden, so dass die Helligkeit der Fahrzeugumgebung heraufgesetzt wird bzw. eine Detektion von Hindernissen mittels Wärmebild erfolgen kann.

Eine wenigstens teilweise lichtschwache Umgebung um ein Fahrzeug herum bedeutet, dass sich das Fahrzeug nicht notwendigerweise vollständig, sondern nur teilweise im Dunkeln befindet. Dies ist beispielsweise der Fall, wenn ein Teil des Fahrzeugs sich in einer dunklen Halle befindet, während sich der andere Teil des Fahrzeugs außerhalb der Halle im Tageslicht befindet. Unter einer lichtschwachen Umgebung ist eine Umgebung zu verstehen, die schlecht oder gar nicht ausgeleuchtet ist, wie beispielsweise in einer Tiefgarage oder bei Nacht. In einer lichtschwachen (dunklen) Umgebung liegt eine Lichtmenge von etwa 0 bis 1.000 lx vor, während in einer lichtstarken (hellen) Umgebung eine Lichtmenge von in etwa 1.000 bis 100.000 lx vorliegt. Unter der Umgebung um das Fahrzeug herum sind Nahbereiche, Sichtbereiche und gesetzlich vorgeschriebene Sichtfelder um das Fahrzeug herum zu verstehen, wobei Sichtbereiche gesetzlich vorgeschriebene Sichtfelder enthalten können.

Im Betrieb des erfindungsgemäßen indirekten Sichtsystems wird üblicherweise bei lichtschwacher Fahrzeugumgebung zunächst die erste Einstellung verwendet. Beispielsweise wird die erste Einstellung für Fahrten auf Autobahnen oder auf über Land verwendet, bei denen Fokus auf der Erkennung von anderen sich bewegenden Fahrzeugen liegt und Details in dunklen Bereichen des Bildes stören und daher nicht angezeigt werden sollen. Wird basierend auf der Fahrsituation ermittelt, dass die erste Einstellung nicht ausreicht, damit der Fahrer die Umgebung um das Fahrzeug schnell und zuverlässig einsehen und damit einschätzen kann, wird die zweite Einstellung verwendet. Die zweite Einstellung wird beispielsweise bei Rangiervorgängen an unbeleuchteten Orten, Abbiegevorgängen an unbeleuchteten Kreuzungen oder beim Aussteigen des Fahrers aus der Fahrerkabine auf einem unbeleuchteten Parkplatz verwendet.
Bei der ersten Einstellung sind die Bildparameter somit optimal auf den normalen Fahrbetrieb festgelegt, während bei der zweiten Einstellung die Bildparameter auf Situationen festgelegt sind, die sich von einem normalen Fahrbetrieb unterscheiden und damit als spezieller Fahrbetrieb bezeichnet werden. Zumindest in der ersten Einstellung müssen alle gesetzlichen Vorgaben für den jeweiligen Sichtbereich jederzeit erfüllt sein. Wenn das Sichtsystem so angepasst ist, dass die zweite Einstellung nur in Fahrsituationen verwendet wird, in denen für den jeweiligen Sichtbereich keine gesetzlichen Vorgaben einzuhalten sind, muss die zweite Einstellung die gesetzlichen Vorgaben nicht unbedingt erfüllen. In einer Umgebung mit stark unterschiedlichen Lichtverhältnissen (gleißendes Sonnenlicht vor einem Gebäude und Dunkelheit in dem Gebäude) oder einer insgesamt sehr dunklen Umgebung um das Fahrzeug herum ermöglicht die zweite Einstellung dem Fahrer somit, auch dunkle Objekte zu erkennen und dadurch etwaige Unfälle vermeiden zu können. Dadurch sind keine zusätzlichen Sensoren erforderlich und es können Kosten gespart werden.

Vorzugsweise erfolgt bei der zweiten Einstellung wenigstens eine Verstärkung der Lichtempfindlichkeit der Aufnahmeeinheit (z.B. des Bildsensors) zur Aufhellung des von dem Bildsensor aufgenommenen Bildes. Die Funktionsweise von Bildsensoren entspricht im Wesentlichen der von Fotodioden, bei denen Licht in elektrischen Strom gewandelt wird. Der elektrische Strom bzw. die Spannung ist ein Analogsignal. In einem Analog-Digital-Umsetzer (ADU, A-D-Wandler) wird der Strom bzw. die Spannung in ein digitales Signal zur Nutzung in einer digitalen Signalverarbeitung gewandelt. Die Verstärkung erfolgt daher entweder bevorzugter Weise im analogen Teil des Bildsensors oder alternativ im digitalen Teil des Bildsensors.

Weiter vorzugsweise schwächt die zweite Einstellung durch Erhöhung der Belichtungszeit und/oder durch zusätzliche Verstärkung und/oder durch Verwendung wenigstens einer weiteren Belichtungszeit und/oder durch Anpassung der Dynamikkompression Bilddaten, die in einem lichtstarken (hellen) Teil eines Sichtbereichs liegen, ab (Übersteuerung, Clipping), wodurch die Bilddaten, die in dem lichtschwachen Teil eines Sichtbereichs liegen, hervorgehoben werden und dadurch besser erkennbar sind.

Alternativ hebt die zweite Einstellung durch Erhöhung der Belichtungszeit und/oder durch zusätzliche Verstärkung und/oder durch Verwendung wenigstens einer weiteren Belichtungszeit und/oder durch Anpassung der Dynamikkompression Bilddaten, die in einem lichtschwachen (dunklen) Teil eines Sichtbereichs liegen, hervor, wodurch die Bilddaten, die in dem lichtschwachen Teil eines Sichtbereichs liegen, ebenfalls hervorgehoben werden und dadurch besser erkennbar sind.

Nach einer bevorzugten Ausführungsform kann die Verwendung der zweiten Einstellung basierend auf Fahrereingaben erfolgen. Dazu kann der Fahrer entweder aufgrund seines Verhaltens oder aufgrund manueller Eingaben die zweite Einstellung auswählen. Als Fahrerverhalten werden sämtliche Bewegungen oder Sprachbefehle des Fahrers verstanden. Die Fahrereingaben können somit bevorzugt durch Beobachtung des Fahrers erfolgen. Beispielsweise kann ein Fahrerverhalten über die Verfolgung der Augenbewegung des Fahrers ermittelt werden (eye-tracking). Zusätzlich oder alternativ kann der Fahrer vorzugsweise manuell die zweite Einstellung anwählen, beispielsweise durch Betätigen eines Drehknopfes, eines Schalters, eines Hebels, eines Tasters, eines Steuerknüppels, durch eine Touchpad-Eingabe, etc.

Alternativ oder zusätzlich zu der Verwendung der zweiten Einstellung basierend auf Fahrereingaben kann die zweite Einstellung auch basierend auf Fahrzeugdaten und/oder Bilddaten erfolgen, die bevorzugt automatisch ermittelt werden. Unter Fahrzeugdaten werden Helligkeitsinformationen der im oder am Fahrzeug verbauten Sensoren, Informationen von Positionierungssystemen (GPS (Global Positioning System), Galileo, Compass, Glonass oder andere Positionierungssysteme, die beispielsweise satellitengestützt sind), Uhrzeit, Geschwindigkeitssignal, Rückwärtsgangsignal, etc. verstanden.

Nach einer bevorzugten Ausführungsform verwendet die Aufnahmeeinheit zum Aufnehmen eines Sichtbereichs um das Fahrzeug herum wenigstens zwei unterschiedliche Belichtungszeiten, um so lichtschwache Bereiche einer Fahrzeugumgebung mit unterschiedlichen Helligkeiten aufnehmen zu können. Die Bilder mit den unterschiedlichen Belichtungszeiten können anschließend zusammen gefügt werden. So kann ein einziges Bild mit einem hohen Kontrast erzeugt werden. Solche Verfahren sind beispielsweise möglich, wenn die Aufnahmeeinheit eine HDR-fähige Kamera ist. HDR-fähige Kameras können Bilder mit hohen Kontrasten erzeugen, sogenannte high dynamic range images, die durch Übereinanderlegen zweier Bilder mit unterschiedlicher Belichtungszeit entstehen.

Vorzugsweise ist die Aufnahmeeinheit eine HDR-fähige Kamera und die zweite Einstellung ist angepasst, Bilddaten in lichtschwachen Bereichen der Fahrzeugumgebung mittels einer Dynamikkompression (tone-mapping) hervorzuheben. Bei Verwendung einer HDR-fähigen Kamera wird eine Dynamikkompression benötigt, um eine Dynamikanpassung an Monitore vorzunehmen, die keine HDR-Bilder anzeigen können.

Bei dem indirekten Sichtsystem sind nach einer bevorzugten Ausführungsform die Anforderungen gesetzlicher Vorschriften (wie beispielsweise der ECE-R46, insbesondere die Anzeige der darin vorgeschriebenen Sichtfelder, insbesondere der Gruppe I und/oder II und/oder II und/oder IV und/oder V und/oder VI, oder die Darstellung von Lichtquellen/-punkten bei Dunkelheit) erfüllt. Beispielsweise zeigen die erste Einstellung und die wenigstens zweite Einstellung helle Punktlichtquellen in einer lichtschwachen Fahrzeugumgebung voneinander unterscheidbar auf der Wiedergabeeinheit an. Als Beispiel kann eine Situation angeführt werden, bei der die Scheinwerfer eines Fahrzeugs, das sich in etwa 200m Entfernung befindet, als zwei Lichtquellen auf der Wiedergabeeinheit dargestellt werden. Wird diese Vorgabe nicht eingehalten, ist dies bevorzugt dem Fahrer mitzuteilen, beispielsweise in Form einer Einblendung, einer Überblendung, eines Alarms, etc.

Nach einer bevorzugten Ausführungsform ist die Berechnungseinheit angepasst, die erste Einstellung und/oder die zweite Einstellung vorzunehmen. Die Berechnungseinheit kann als einzelne Komponente in dem indirekten Sichtsystem vorgesehen sein oder entweder in die Aufnahmeeinheit oder die Wiedergabeeinheit integriert sein.

Nach einer bevorzugten Ausführungsform ist das Sichtsystem ein Spiegelersatzsystem, das einen oder mehrere herkömmliche Spiegel (insbesondere zur Beobachtung von gesetzlich vorgeschriebenen Sichtfeldern) ersetzt. Ein solches Spiegelersatzsystem kann ein Kamera-Monitor-System sein. In solchen Kamera-Monitor-Systemen erfasst (ermittelt und ggf. speichert) eine Bildsensoreinrichtung kontinuierlich ein Bild. Die (Video-) Daten, die von der Bilderfassungseinheit erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, dass die Sichtfelder jederzeit für den Fahrer permanent einsehbar sind. Gleichzeitig liefert das Sichtsystem eine verbesserte Nachtansicht, flexiblere Anordnungsmöglichkeiten und größere Sichtfelder mit der Möglichkeit einer geringeren Verzerrung.

### KURZE BESCHREIBUNG DER ZEICHNUNGEN

Im Folgenden wird die Erfindung beispielhaft unter Bezugnahme auf die angehängten Figuren beschrieben, in denen:
Fig. 1 einen schematischen Aufbau des indirekten Sichtsystems gemäß der Erfindung zeigt,
Fig. 2 ein Histogramm eines Bildes in Übereinstimmung mit der ersten Einstellung zeigt,
Fig. 3 ein Histogramm des Bildes aus Fig. 2 in Übereinstimmung mit der zweiten Einstellung zeigt,
Fig. 4 eine symbolische Darstellung einer Fahrzeugumgebung zeigt,
Fig. 5A und 5B eine Aufnahme einer Fahrzeugumgebung mit der ersten Einstellung gemäß Fig. 2 zeigen, und
Fig. 6A und 6B eine Aufnahme einer Fahrzeugumgebung mit der zweiten Einstellung gemäß Fig. 3 zeigen.

### DETAILLIERTE BESCHREIBUNG DER ERFINDUNG

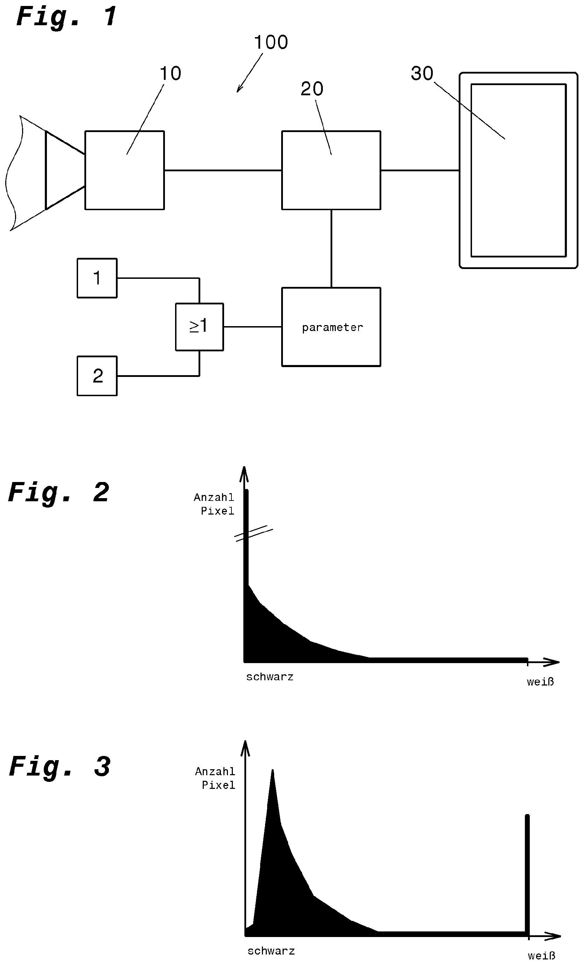

Fig. 1 zeigt einen schematischen Aufbau eines indirekten Sichtsystems 100 gemäß der vorliegenden Erfindung. Das indirekte Sichtsystem 100 weist eine Aufnahmeeinheit 10, eine Berechnungseinheit 20 und eine Wiedergabeeinheit 30 auf.

Die Aufnahmeeinheit 10 ist angepasst zum Aufnehmen von Bildern einer Umgebung um ein Fahrzeug (nicht gezeigt), insbesondere ein Nutzfahrzeug, in Form von Bilddaten. Dazu ist die Aufnahmeeinheit 10 auf geeignete Art und Weise an dem Fahrzeug angebracht. Die Aufnahmeeinheit 10 kann eine Kamera sein, insbesondere eine Kamera mit einem Sensor nach einer CMOS- oder CCD-Technologie, oder ein jeglicher anderer Bildsensor, der geeignet ist, bewegte Bilder aufzunehmen. Es können mehrere Aufnahmeeinheiten 10 vorgesehen sein. Die Aufnahmeeinheit 10 steht mit der Berechnungseinheit 20 in Verbindung, beispielsweise über Verbindungskabel oder Funk.

Die Berechnungseinheit 20 ist angepasst zum Verarbeiten der von der Aufnahmeeinheit 10 aufgenommenen Bilddaten. Dazu verwendet die Berechnungseinheit 20 vorgegebene/geänderte Bildparameter, wie beispielsweise die Auflösung, den Kontrast, die Farbsättigung, -temperatur und -töne, die Belichtung, etc. Die Bildparameter können durch die Berechnungseinheit 20 oder können zusätzlich oder alternativ durch eine Anpassung der Fahrzeugumgebung geändert werden, wie z.B. eine Anbringung und Verwendung einer zusätzlichen Lichtquelle oder eines Wärmebildsensors am Fahrzeug. Die Berechnungseinheit 20 weist wenigstens zwei Einstellungen 1 und 2 auf. Beide Einstellungen 1, 2 werden in lichtschwacher Umgebung verwendet und dienen dazu, Parameter entweder so auszuwählen (erste Einstellung 1) oder so anzupassen (zweite Einstellung 2), dass dem Fahrer die nötigen und/oder vorgeschriebenen Informationen auf der Wiedergabeeinheit 30 angezeigt werden können. Dabei sind gesetzliche Vorgaben (wie gesetzlich vorgeschriebene Sichtfelder oder die Darstellung von Punktlichtquellen) einzuhalten, wobei es bei der Darstellung von Punktlichtquellen ausreichend ist, eine unzureichend genaue Darstellung, die eine Unterscheidung der Punktlichtquellen nicht ermöglicht, mittels eines entsprechenden Hinweises auf der Wiedergabeeinheit 30 kenntlich zu machen. Das in Fig. 1 abgebildete Zeichen "≥" bezieht sich vorliegend auf eine logische Verknüpfung der beiden Einstellungen 1 und 2 dergestalt, dass (bei lichtschwacher Umgebung) stets eine der beiden Einstellungen 1, 2, nie aber eine Kombination der beiden Einstellungen 1, 2 zu verwenden ist. Die Berechnungseinheit 20 steht mit der Wiedergabeeinheit 30 in Verbindung, beispielsweise über Verbindungskabel oder Funk.

Die Wiedergabeeinheit 30 ist angepasst zum Anzeigen von Bildern, die von der Aufnahmeeinheit 10 aufgenommen und von der Berechnungseinheit 20 verarbeitet wurden. Die Wiedergabeeinheit 30 kann ein Monitor, wie beispielsweise ein LCD-, TFT- oder LED-Monitor, sein. Es können mehrere Wiedergabeeinheiten 30 vorgesehen sein.

Die Einstellung 1 wird vornehmlich bei normalen Fahrsituationen, wie Autobahnfahrten oder Fahrten über Land, ausgewählt. Die Einstellung 1 verwendet vorgegebene Parameter, die in Datenbanken, Tabellen, etc. gespeichert sein können. Die Einstellung 2 wird vornehmlich bei speziellen Fahrsituationen (die sich von den normalen Fahrsituation unterscheiden), wie Fahrmanövern, wie z.B. Rangieren, Abbiegen, Rückwärtsfahren, etc., oder besonderen Bedingungen in der Umgebung um das Fahrzeug, der Fahrerkabine, dem Verhalten des Fahrers, ausgewählt. Die Einstellung 2 verwendet geänderte (gegenüber der Einstellung 1 geänderte bzw. angepasste) Bildparameter, die durch Beobachtung der Fahrsituation ermittelt werden.

Entweder erfolgt die Auswahl der Einstellung 1 und 2 automatisch durch Ermitteln von Fahrsignalen (Geschwindigkeit, Lenkeinschlag, Blinker, Uhrzeit, GPS, am Fahrzeug verbauten Sensoren, etc.) und/oder durch Ermitteln von Fahrereingaben (manuelle Eingaben, Bewegungen des Fahrers, Sprachbefehle, etc.). Es ist auch denkbar, dass die Einstellungen 1 und 2 bei speziellen bzw. normalen Fahrsituationen (d.h. gegeneinander vertauscht, ausgewechselt) angewendet werden, solange gesetzliche Vorgaben (wie gesetzlich vorgeschriebene Sichtfelder oder die Darstellung von Punktlichtquellen) eingehalten werden.

Fig. 2 zeigt ein Histogramm eines auf der Wiedergabeeinheit 30 angezeigten Bildes, das mittels der Einstellung 1 an vorgegebene Parameter angepasst ist. Ein Histogramm stellt die Verteilung der Pixel eines Bildes auf die verschiedenen Helligkeitsstufen grafisch dar. Das Histogramm zeigt Details in den Tiefen (linker Teil des Histogramms), in den Mitteltönen (Mitte) und in den Lichtern (rechter Teil). Vorliegend ist auf der X-Achse (Achse die in der Blattebene von links nach rechts verläuft) die Helligkeit der Pixel von schwarz (ganz links) bis weiß (ganz rechts) aufgetragen. Auf der Y-Achse (Achse die in der Blattebene von unten nach oben verläuft) ist die Anzahl der Pixel von Null (ganz unten) bis n (ganz oben, n = natürliche Zahl) aufgetragen. Das in Fig. 2 gezeigte Histogramm bildet die Häufigkeit der in der entsprechenden Helligkeit auftretenden Pixel ab. Wie dem in Fig. 2 gezeigten Histogramm zu entnehmen ist, befindet sich ein Großteil der von der Wiedergabeeinheit angezeigten Bildpixel an dem linken Ende der X-Achse (an dem Ende, an dem die Pixel dunkel bzw. "schwarz" sind) und sind somit vornehmlich dunkel. Eine solche Anzeige von Pixeln entspricht einer Anzeige einer dunklen Umgebung mit der Einstellung 1, wie sie bei einer Autobahnfahrt oder einer Überlandfahrt verwendet wird und ein Anzeigen von Körpern in der Umgebung nicht erforderlich ist, bis auf Punktlichtquellen eines sich in der Umgebung bewegenden Fahrzeugs.

Fig. 3 zeigt ebenfalls ein wie in Fig. 2 aufgebautes Histogramm, bei dem das auf der Wiedergabeeinheit 30 angezeigte Bild aus Fig. 2 jedoch etwas aufgehellt ist, d.h. etwas nach rechts in Richtung "weiß" verschoben ist. Damit befinden sich die Pixel nicht mehr, wie in Fig. 2, an dem linken Ende der X-Achse, sondern sind etwas nach rechts verschoben und damit auf der Wiedergabeeinheit heller dargestellt. Eine solche Anzeige von Pixeln entspricht einer Anzeige einer dunklen Umgebung mit der Einstellung 2, wie sie beispielsweise bei speziellen Fahrmanövern (Rangieren, Abbiegen, Rückwärtsfahren, etc.) verwendet wird, die eine hellere Darstellung der dunkeln Umgebung erfordern als bei einer Autobahn- oder Überlandfahrt, und ein bildliches Hervorheben von Körpern in der Umgebung erfordern, ohne dabei gesetzliche Vorgaben zu missachten.

Eine Anpassung der Bildparameter, wie sie in Fig. 3 gezeigt ist, kann durch Ändern der Auflösung, des Kontrastes, der Sättigung, der Farbtemperatur (des Weißabgleichs), der Farbtöne, der Belichtung, etc. von Bilddaten erfolgen. Alternativ oder zusätzlich zu der Anpassung der Bildparameter durch die Berechnungseinheit kann eine Anpassung von Bildparametern auch durch Anbringen einer zusätzlichen Lichtquelle oder einer Wärmebildkamera (monochrom oder farbig) am Fahrzeug erfolgen. Dadurch kann der dunkle Teil der Fahrzeugumgebung ausgeleuchtet werden, so dass die Helligkeit der Fahrzeugumgebung heraufgesetzt wird bzw. eine Detektion von Hindernissen mittels Wärmebild erfolgen.

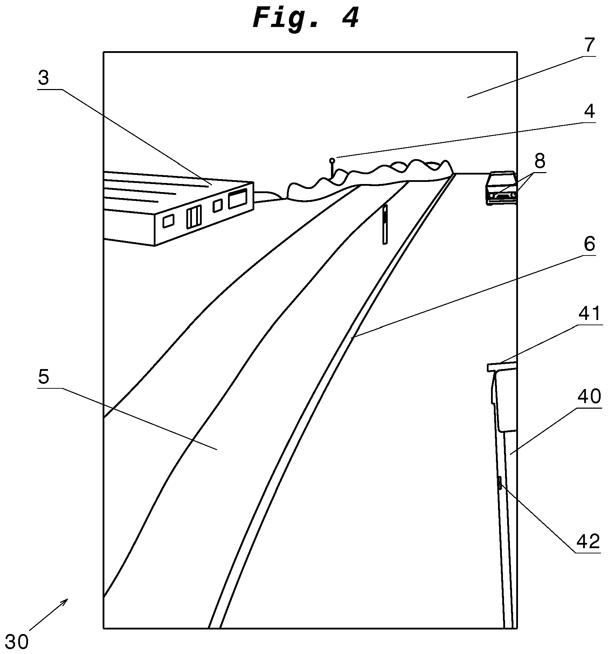

In Fig. 4 ist eine Fahrzeugumgebung, wie sie auf einer Wiedergabeeinheit 30 von einem Fahrer eingesehen werden kann, symbolisch dargestellt. Auf der linken Bildseite ist ein Gebäude 3 mit (beleuchteten) Fenstern abgebildet. Mittig sind eine Laterne 4, ein Straßengraben 5 und eine Straßenmarkierung 6 abgebildet. Auf der rechten Bildseite ist ein Horizont 7, einen Personenkraftwagen (PKW) 8, ein Teil eines Lastkraftwagens (LKW) 40 (Zugmaschine ohne Auflieger), ein Teil einer LKW-Rückleuchte 41 und eine Seitenmarkierungsleuchte des LKW 41 abgebildet.

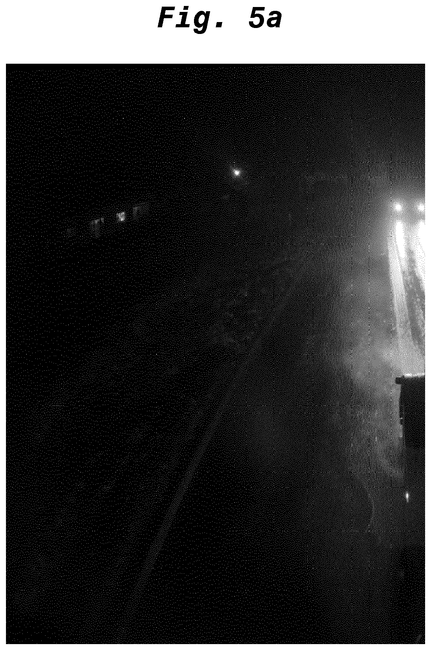

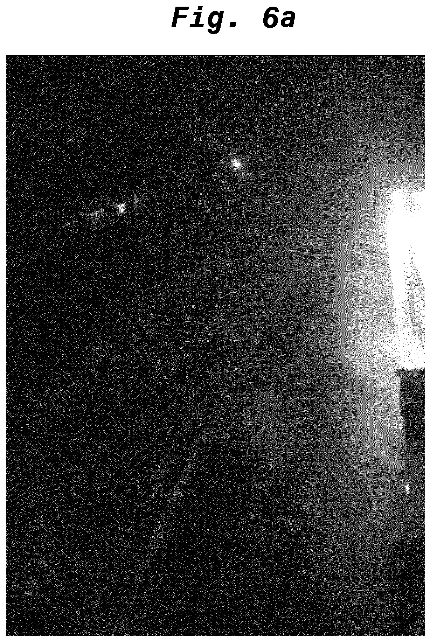

Bei einer Fahrt (z.B. Autobahn oder über Land) bei lichtschwacher Umgebung oder gar Dunkelheit verwendet das Sichtsystem 100 die Einstellung 1 (wie in Fig. 5A gezeigt), wodurch der Fahrer auf der Anzeigeeinheit 30 im Wesentlichen nur die Scheinwerfer des PKW 8 als Punktlichtquellen sieht. Bei z.B. einem Rangiervorgang bei lichtschwacher Umgebung oder gar Dunkelheit verwendet das Sichtsystem 100 (entweder automatisch oder durch eine oder mehrere entsprechende Eingaben des Fahrers) die Einstellung 2 (wie in Fig. 6A gezeigt), wodurch eine Änderung der Bildparameter zur Anzeige der Bilddaten auf der Wiedergabeeinheit 30 dergestalt erfolgt, dass der Fahrer nun auch die Umgebung (wie das Gebäude 3, die Straßenmarkierung 6, etc.) besser erkennen kann. Dadurch werden die Scheinwerfer des PKW 8 regelmäßig nicht mehr als Punktlichtquellen zu erkennen sein, was nach der ECE-R46 nur zulässig ist, wenn dies dem Fahrer beispielsweise durch ein entsprechendes Symbol (icon) auf der Wiedergabeeinheit, wie einem Monitor, angezeigt wird. Alternativ ist es denkbar, dass, damit die Scheinwerfer des PKW 8 nicht als sehr helle Punkte, schlechtesten falls als nicht getrennt wahrnehmbare Punktlichtquellen, gezeigt werden, die Änderung der Bildparameter nur in den lichtschwachen Bereichen der Umgebung, nämlich der Fahrzeugumgebung, die nicht den PKW 8 enthält, erfolgt. So kann der Fahrer z.B. beim Rangieren die Umgebung gut einsehen und sich schnell ein Bild der Umgebung machen, ohne von den Scheinwerfern des PKW 8 geblendet zu werden oder diese nicht mehr als solche zu erkennen.

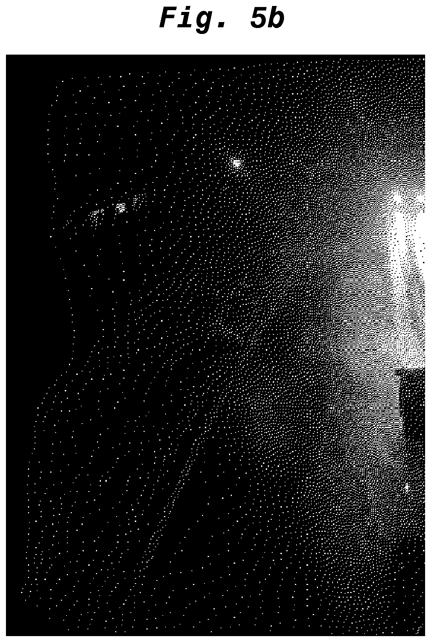

Fig. 5A und 5B zeigen eine Aufnahme der in Fig. 4 abgebildeten Fahrzeugumgebung mit der Einstellung 1, wie sie in etwa auch auf einer Wiedergabeeinheit 30 in einer Fahrerkabine zu sehen ist, wobei Fig. 5A im Wesentlichen der Darstellung entspricht, wie sie in der Fahrerkabine zu sehen ist, und Fig. 5B eine gerenderte Ansicht ist. Wie in Fig. 5A zu sehen ist, sind die Scheinwerfer des PKW 8 gut als getrennte Punktlichtquellen zu erkennen bzw. unterscheidbar. Details in dunklen Bereichen der Fahrzeugumgebung sind nicht erkennbar. Die in Fig. 5A gezeigte Aufnahme entspricht dem in Fig. 2 gezeigten Histogramm, in dem die Bildinhalte stark in Richtung des Schwarzbereichs verschoben sind und die Pixel unter einem bestimmten Helligkeitsschwellenwert im Bild auf den Minimalwert zusammengefasst werden (siehe Spitze am linken, d.h. dem schwarzen Ende des Histogramms).

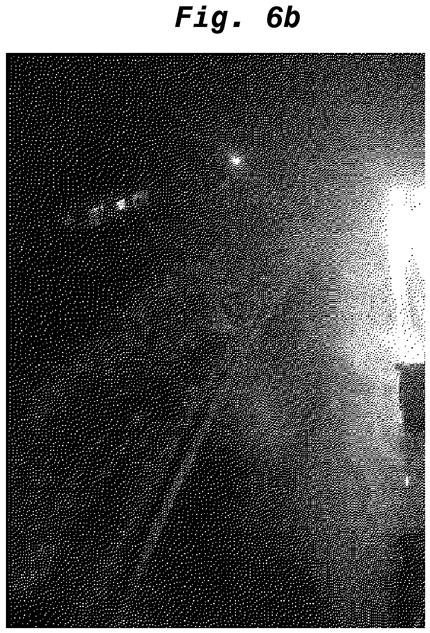

Fig. 6A und 6B zeigen eine Aufnahme der in Fig. 4 abgebildeten Fahrzeugumgebung mit der Einstellung 2, wie sie in etwa auch auf einer Wiedergabeeinheit 30 in einer Fahrerkabine zu sehen ist, wobei Fig. 6A im Wesentlichen der Darstellung entspricht, wie sie in der Fahrerkabine zu sehen ist, und Fig. 6B eine gerenderte Ansicht ist. Wie in Fig. 6A zu sehen ist, sind die Scheinwerfer des PKW 8 nur schlecht als getrennte Punktlichtquellen zu erkennen bzw. unterscheidbar. Details in dunklen Bereichen der Fahrzeugumgebung hingegen sind im Vergleich zu Fig. 5A besser erkennbar. Die in Fig. 6A gezeigte Aufnahme entspricht dem in Fig. 3 gezeigten Histogramm, in dem die Bildinhalte im Schwarzbereich aufgehellt dargestellt sind und die Pixel über einem bestimmten Helligkeitsschwellenwert im Bild auf den Maximalwert zusammengefasst werden (siehe Spitze am rechten, d.h. dem weißen Ende des Histogramms).

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### BEZUGSZEICHENLISTE

- 1: erste Einstellung
- 2: zweite Einstellung
- 3: Gebäude
- 4: Straßenlaterne
- 5: Straßengraben
- 6: Straßenmarkierung
- 7: Horizont
- 8: PKW
- 10: Aufnahmeeinheit, Kamera
- 20: Berechnungseinheit, ECU
- 30: Wiedergabeeinheit
- 40: LKW
- 41: LKW-Rückleuchte
- 42: LKW-Seitenmarkierungsleuchte
- 100: indirektes Sichtsystem

## Patentansprüche

1. Indirektes Sichtsystem (100) für ein Fahrzeug, enthaltend:
wenigstens eine Aufnahmeeinheit (10), die zum Aufnehmen von Bilddaten wenigstens eines Sichtbereichs um das Fahrzeug herum angepasst ist,
wenigstens eine Berechnungseinheit (20), die zum Verarbeiten der von der Aufnahmeeinheit (10) aufgenommenen Bilddaten angepasst ist, und
wenigstens eine Wiedergabeeinheit (30), die zum Anzeigen des Sichtbereichs angepasst ist,
wobei das indirekte Sichtsystem (100) eine erste Einstellung (1) zum Anzeigen des Sichtbereichs und wenigstens eine zweite Einstellung (2) zum Anzeigen des Sichtbereichs aufweist, wobei
die erste Einstellung (1) vorgegebene Bildparameter verwendet,
die wenigstens zweite Einstellung (2) gegenüber der ersten Einstellung geänderte Bildparameter verwendet, und
die erste Einstellung (1) und die wenigstens zweite Einstellung (2) bei einer wenigstens teilweise lichtschwachen Fahrzeugumgebung abhängig von der Fahrsituation verwendbar sind.

2. Indirektes Sichtsystem (100) nach Anspruch 1, wobei bei der zweiten Einstellung (2) wenigstens eine Verstärkung der Lichtempfindlichkeit der Aufnahmeeinheit (10) erfolgt.

3. Indirektes Sichtsystem (100) nach Anspruch 2, wobei die Verstärkung im analogen Teil des Bildsensors der Aufnahmeeinheit (10) erfolgt.

4. Indirektes Sichtsystem (100) nach Anspruch 2, wobei die Verstärkung im digitalen Teil des Bildsensors der Aufnahmeeinheit (10) erfolgt.

5. Indirektes Sichtsystem (100) nach einem der vorhergehenden Ansprüche, wobei die zweite Einstellung (2) durch Erhöhung der Belichtungszeit und/oder durch zusätzliche Verstärkung und/oder durch Verwendung wenigstens einer weiteren Belichtungszeit und/oder durch Anpassung der Dynamikkompression Bilddaten, die in einem lichtstarken Teil eines Sichtbereichs liegen, abschwächt.

6. Indirektes Sichtsystem (100) nach einem der vorhergehenden Ansprüche, wobei die zweite Einstellung (2) durch Erhöhung der Belichtungszeit und/oder durch zusätzliche Verstärkung und/oder durch Verwendung wenigstens einer weiteren Belichtungszeit und/oder durch Anpassung der Dynamikkompression Bilddaten, die in einem lichtschwachen Teil eines Sichtbereichs liegen, hervorhebt.

7. Indirektes Sichtsystem (100) nach einem der vorhergehenden Ansprüche, wobei ein Verwenden der zweiten Einstellung (2) basierend auf Fahrereingaben erfolgen kann.

8. Indirektes Sichtsystem (100) nach Anspruch 7, wobei die Fahrereingaben manuell und/oder durch das Verhalten des Fahrers erfolgen können.

9. Indirektes Sichtsystem (100) nach einem der vorhergehenden Ansprüche, wobei ein Verwenden der zweiten Einstellung (2) basierend auf Fahrzeugdaten und/oder Bilddaten erfolgen kann.

10. Indirektes Sichtsystem (100) nach einem der vorhergehenden Ansprüche, wobei die Aufnahmeeinheit (10) zum Aufnehmen eines Sichtbereichs um das Fahrzeug herum eine HDR-fähige Kamera ist, die wenigstens zwei unterschiedliche Belichtungszeiten verwendet.

11. Indirektes Sichtsystem (100) nach einem der vorhergehenden Ansprüche, wobei die Aufnahmeeinheit eine HDR-fähige Kamera ist und die zweite Einstellung (2) angepasst ist, Bilddaten in lichtschwachen Bereichen der Fahrzeugumgebung mittels einer Dynamikkompression hervorzuheben.

12. Indirektes Sichtsystem (100) nach einem der vorhergehenden Ansprüche, wobei die Anforderungen gesetzlicher Vorschriften erfüllt sind.

13. Indirektes Sichtsystem (100) nach einem der vorhergehenden Ansprüche, wobei die erste Einstellung (1) und die wenigstens zweite Einstellung (2) wenigstens zwei helle Punktlichtquellen in einer lichtschwachen Fahrzeugumgebung voneinander unterscheidbar auf der Wiedergabeeinheit anzeigen.

14. Indirektes Sichtsystem (100) nach einem der vorhergehenden Ansprüche, wobei die Berechnungseinheit (20) angepasst ist, die erste Einstellung (1) und/oder die zweite Einstellung (1) vorzunehmen.

15. Indirektes Sichtsystem (100) nach einem der vorhergehenden Ansprüche, wobei das Sichtsystem (100) ein Spiegelersatzsystem ist.
